# EUROPEAN PATENT SPECIFICATION

(11) **EP 1 293 998 B1**
(45) Date of publication and mention of the grant of the patent: **01.09.2010**
(21) Application number: 02020459.0
(22) Date of filing: 11.09.2002
(51) Int. Cl.: H01H 3/16, H04M 1/02

(54) **Open/close detection device for a mobile telephone**
Auf/Zu Detektionsvorrichtung für ein Mobiltelefon
Dispositif de détection d'ouverture/fermeture pour un téléphone portable

(30) Priority: 18.09.2001 JP 2001283648
(43) Date of publication of application: 19.03.2003
(73) Proprietor: ALPS ELECTRIC CO., LTD., Tokyo 145-8501 (JP); Strawberry Corporation, Kawagoe-shi, Saitama-ken (JP)
(72) Inventor: Kawase, Tatsuaki, Tokyo 145-8501 (JP)
(74) Representative: Klunker . Schmitt-Nilson . Hirsch

(56) References cited:
- EP-A- 0 959 603
- PATENT ABSTRACTS OF JAPAN vol. 0135, no. 22 (E-849), 21 November 1989 (1989-11-21) & JP 1 212052 A (MATSUSHITA COMMUN IND CO LTD; others: 01), 25 August 1989 (1989-08-25)

## Description

### BACKGROUND OF THE INVENTION

### 1. Field of the Invention

The present invention relates to a device for detecting an open/closed state of a cover used in a structure such as a mobile phone, etc., in which the cover is reliably attached to a main body with a hinge.

### 2. Description of the Related Art

In mobile phones including a main body having an operating unit, a cover which covers the main body, and a hinge which connects the cover to the main body in a rotatable manner, devices for detecting an open/closed state of the cover are commonly used.

Devices for detecting the cover's open/closed state of the known art include a projection which extends outward from the cover and a rubber contact portion which is provided on a main body and which changes a detection state to ON when it is pressed by the projection. Accordingly, when the cover is closed, the projection pushes the rubber contact portion and the detection state changes to ON, and thereby the closed state of the cover is detected. On the contrary, when the cover is opened, the projection moves away from the rubber contact portion and the rubber contact portion returns to its original shape due to the elasticity thereof. Accordingly, the detection state changes to OFF, and thereby the open state of the cover is detected.

However, according to the above-described known technique, when, for example, the mobile phone is stored in a chest pocket, a clump of dust in the pocket may be stuck on the rubber contact portion. In such a case, even when the mobile phone is taken out from the pocket and the cover is opened, the clump of dust may continuously jam the rubber contact portion. Accordingly, there is a risk in that the detection state cannot be changed to OFF and the ON state will be maintained. Thus, the open state of the cover cannot be detected. As a result, an operation of illuminating a liquid crystal display formed on the cover and keys arranged on the operating unit of the main body on the basis of a detection signal indicating the open/closed state cannot be performed.

In addition, if, for example, a small obstacle is caught between the cover and the main body, the projection may not reach the rubber contact portion when the user closes the cover before storing the mobile phone inside the chest pocket. In such a case, the detection state cannot be changed to ON and the OFF state is maintained. Thus, the closed state of the cover cannot be detected. As a result, the liquid crystal display and the keys are continuously illuminated since the detection signal continuously represents the open state of the cover, thus, a battery is quickly drained.

As described above, according to the known technique, there is a risk in that the open state cannot be detected even when the cover is opened, or the closed state cannot be detected even when the cover is almost closed. More specifically, an idea of reliably detecting the open/closed state of the cover when the rotational angle of the cover reaches a predetermined angle is not incorporated in the known technique,. and. there is a problem in that a satisfactory detection accuracy cannot be obtained.

In addition,. according to the known technique, since the projection extends outward from the cover, there is also a problem in that the appearance is degraded. Furthermore, since a space for arranging the projection must be provided in the cover and a space for arranging the rubber contact. portion must be provided in the main body, the size of the overall body including the main body and the cover increases. Accordingly, it is difficult to reduce the size of the device.

Document EP 0 959 603 discloses a device according to the preamble of claim 1.

### SUMMARY OF THE INVENTION

In view of the above-described situation, an object of the present invention is to provide a device which reliably detects an open/closed state of a cover when the rotational angle of the cover reaches a predetermined angle, in which it is not necessary to form a projection extending outward from the cover, and whose overall size including the cover and the main body can be reduced.

In order to attain the above-described object, according to the present invention, a device for detecting an open/closed state of a cover, which is installed in a structure having a main body, the cover which is rotatably connected to the main body and which covers the main body, and a hinge which connects the cover to the main body in a rotatable manner, includes a movable contact member which rotates along with the hinge, and a fixed contact member which slidably moves relative to the movable contact member. The open/closed state of the cover is detected on the basis of whether the movable contact member and the fixed contact member are in contact with each other or separated from each other.

According to the present invention, in the case in which the hinge is fixed to the cover and the fixed contact member is attached to the main body, when the cover rotates, the hinge rotates together with the cover at the same rotational angle, and the movable contact member also rotates. In addition, in the case in which the hinge is fixed to the main body and the fixed contact member is attached to the cover,. when the cover rotates, the hinge rotates with respect to the cover at a rotational angle corresponding to that of the cover, and the movable contact member also rotates with respect to the cover. Accordingly, the movable contact member and the fixed contact member comes into contact with or moves away from each other,. so that the open/closed state of the cover is detected.

More specifically, a rotational angle at which it is determined that the cover is open is determined in advance, and the movable contact member and the fixed contact member are formed such that they come into contact with or move away from each other when the rotational angle of the cover exceeds the predetermined rotational angle. Accordingly, the open state of the cover is reliably detected when the movable contact member and the fixed contact member come into contact with or move away from each other. On the contrary, when the rotational angle of the cover is reduced to less than the predetermined rotational angle, the movable contact member and the fixed contact member move away from or come into contact with each other, so that. the closed state of the cover is detected. Thus, by taking into account the rotational angle of the cover and the time when the movable contact member and the fixed contact member come into contact with or move away from each other, the open/closed state of the cover is reliably detected when the rotational angle of the cover reaches the predetermined angle, even if a small obstacle is caught between the cover and the main body. Accordingly, the accuracy in detecting the open/closed state of the cover is increased compared with the known technique.

The movable contact member may be disposed inside a hinge unit containing the hinge, and the fixed contact member may be stored inside the main body or inside the cover. Accordingly, it is not necessary to provide a projection which extends outward from the cover, and the appearance is prevented from being degraded.

Since the movable contact member may be disposed inside the hinge unit and the fixed contact member may be stored inside the main body or inside the cover, only a space for disposing the fixed contact member is required in the main body or in the cover. Accordingly, the size of the overall body including the cover and the main body is reduced.

The device for detecting the open/closed state of the cover according to the present invention further includes a rotator having a rotating plate which rotates along with the hinge, and the movable contact member may be formed on the rotating plate in an annular pattern along the rotational direction of the hinge.

According to the present invention, when the cover rotates, the hinge rotates together with the cover at the same rotational angle or with respect to the cover at a rotational angle corresponding to that of the cover. Accordingly, the rotating plate also rotates along with the cover or with respect to the cover, and the movable contact member, which has an annular pattern formed on the rotating plate, comes into contact with or moves away from the fixed contact member, so that the open/closed state of the cover is detected.

In addition, since the movable contact member is formed on the rotating plate whose thickness can be reduced,. the movable contact member can be disposed in a small space inside the hinge unit which contains the hinge.

The movable contact member is formed at one side of the rotating plate of the rotator and a common contact portion is formed at the other side of the rotating plate, the common contact portion being formed in an annular pattern along the rotational direction of the hinge. In addition, the fixed contact member includes a pair of fixed contact elements which are arranged such that one of the fixed contact elements comes into contact with the movable contact member and the other fixed contact element comes into contact with the common contact portion, the rotating plate being disposed between the fixed contact elements.

According to the present invention, when the cover rotates, the hinge rotates along with the cover at the same rotational angle or with respect to the cover at a rotational angle corresponding to that of the cover. Accordingly, the rotating plate also rotates along with the cover or with respect to the cover, and the movable contact member, which is formed at one side of the rotating plate in an annular pattern, comes into contact with or moves away from one of the fixed contact elements, and the common contact portion, which is formed at the other side of the rotating plate in an annular pattern, comes into contact with or moves away from the other fixed contact element, so that the open/closed state of the cover is detected.

In addition, since the common contact portion is also disposed inside the hinge portion, it is not necessary to provide a space for disposing the common contact portion in the main body or in the cover. Accordingly, the overall size is reduced.

The rotating plate of the rotator may have a cut portion for separating the movable contact member formed on the rotating plate and the fixed contact member from each other.

In this case, when the cover rotates and the rotating plate also rotates along with the cover or with respect to the cover due to the hinge, a detection state is changed to OFF when the fixed contact member reaches the position where the cut portion is formed. Accordingly, a rotational angle of the cover at which the open/closed state of the cover is detected can be freely determined by adjusting the shape and the size of the cut portion.

The annular pattern of the movable contact member and the annular pattern of the common contact portion may be formed in approximately the same shape.

In such a case, the time at which the annular pattern of the movable contact point comes into contact with one of the fixed contact elements and the time at which the annular pattern of the common contact element comes into contact with the other fixed contact element are made the same. Since annular patterns having the same shape are simply formed at both sides of the rotating plate, the process of forming the movable contact member and the common contact portion on the rotating plate can be easily performed.

The annular pattern of the movable contact member and the annular pattern of the common contact portion may also be formed in different shapes.

In such a case, the time at which the annular pattern of the movable contact point comes into contact with one of the fixed contact elements and the time at which the annular pattern of the common contact element comes into contact with the other fixed contact element are offset from each other. Accordingly, the rotational angle of the cover at which the open/closed state of the cover is detected can be set to a desired angle by changing the shape of the annular pattern of the movable contact member.

The device for detecting the open/closed state of the cover according to the present invention may further include a housing which is disposed such that the housing opposes the hinge and which stores and retains the rotator in a rotatable manner.

In such a case, the rotating plate can rotate along with the hinge inside the housing. In addition, the movable contact member formed on the rotating plate is protected and is prevented from being damaged by dust and dirt which enter from outside. Accordingly, durability is increased.

The device for detecting the open/closed state of the cover according to the present invention may further include a detachable wafer which is attached to the housing and which retains the fixed contact member.

Accordingly, when the device is assembled, the fixed contact member retained by the wafer can be positioned such that the fixed contact member comes into contact with the movable contact member formed on the rotating plate in an annular pattern by attaching the wafer to the housing. Thus, the movable contact member and the fixed contact member can be easily installed.

The device for detecting the open/closed state of the cover according to the present invention may further include a terminal on which the fixed contact member is formed, a circuit board having a pattern which comes into contact with the terminal, and a protecting wall which surrounds the terminal facing the circuit board.

In this case, when the movable contact member and the fixed contact member come into contact with each other, a detection signal is transmitted to the pattern formed on the circuit board via the terminal. In addition, the connecting portion between the terminal and the pattern formed on the circuit board is protected by the protecting wall. Thus, connecting portions are prevented from being damaged by dust and dirt which enter from outside, and durability is increased.

The device for detecting the open/closed state of the cover according to the present invention may further include a rotational-force transferring unit which transfers the rotating motion of the hinge to the rotating plate of the rotator.

In this case, the rotation of the hinge is smoothly transferred to the rotating plate by the rotational-force transferring unit, and the rotational angle of the cover is made the same as the rotational angle, or a relative rotational angle, of the rotating plate. Accordingly, the. accuracy in detecting the open/closed state of the cover is increased.

The rotational-force transferring unit may be formed integrally with the hinge.

In this case, the rotational-force transferring unit can be formed at the same time the hinge is manufactured. Accordingly, the number of processes is reduced and the manufacturing cost is prevented from increasing.

The rotational-force transferring unit may include an arm portion having a projection at an end thereof and an oblong hole may be formed in the rotator, the arm portion being inserted and the projection being snapped into the oblong hole.

In this case, the hinge and the rotator can be easily fixed to each other by inserting the arm portion formed integrally with the hinge into the hole formed in the rotator. Accordingly, the rotator is reliably positioned relative to the hinge. In addition,. the process of installing the hinge and the rotator can be efficiently performed, and the rotational angle of the hinge and the rotational angle of the rotating plate are made the same. Accordingly, the accuracy in detecting the open/closed state of the cover is further increased.

### BRIEF DESCRIPTION OF THE DRAWINGS

Fig. 1 is a perspective view of a mobile phone, which is an example of a structure including a device for detecting an open/closed state of a cover according to the embodiment of the present invention;
Fig. 2 is an enlarged view of a part denoted by A in Fig. 1;
Fig. 3 is a front view of a detector used in the device according to the embodiment of the present invention;
Fig. 4 is a plan view of the detector used in the embodiment of the present invention;
Fig. 5 is a perspective view showing a manner in which the device according to the embodiment of the present invention is installed into a hinge unit of the mobile phone;
Fig. 6 is a rear view of the mobile phone in which the device according to the embodiment of the present invention is installed in the manner shown in Fig. 5;
Fig. 7 is a side view of the mobile phone shown in Fig. 6;
Fig. 8 is an enlarged sectional view of a part of the mobile phone corresponding to the part denoted by B in Fig. 7;
Fig. 9 is an enlarged sectional view of a part corresponding to the part denoted by C in Fig. 6;
Fig. 10 is an exploded perspective view of a main part of the detector used in the embodiment of the present invention;
Figs. 11A and 11B are drawings showing a movable contact member and a common contact portion in an ON state, the movable contact member and the common contact portion being disposed inside the detector which is installed as shown in Fig. 8, where Fig. 11A shows the movable contact member and Fig. 11B shows the common contact portion;
Fig. 12 is a drawing showing the movable contact member of the detector, which is installed as shown in Fig. 8, in OFF state; and
Figs. 13A and 13B are drawings showing a modification of the combination of the movable contact member and the common contact portion, where Fig. 13A shows a movable contact member and Fig. 13B shows a common contact portion.

### DESCRIPTION OF THE PREFERRED EMBODIMENT

A device for detecting an open/closed state of a cover according to an embodiment of the present invention will be described below with reference to the accompanying drawings.

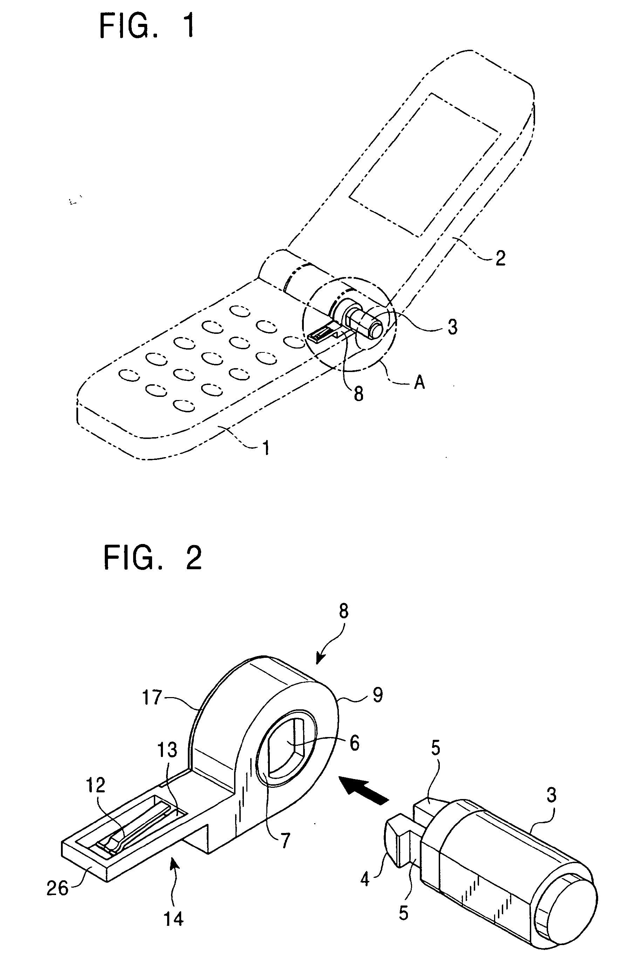

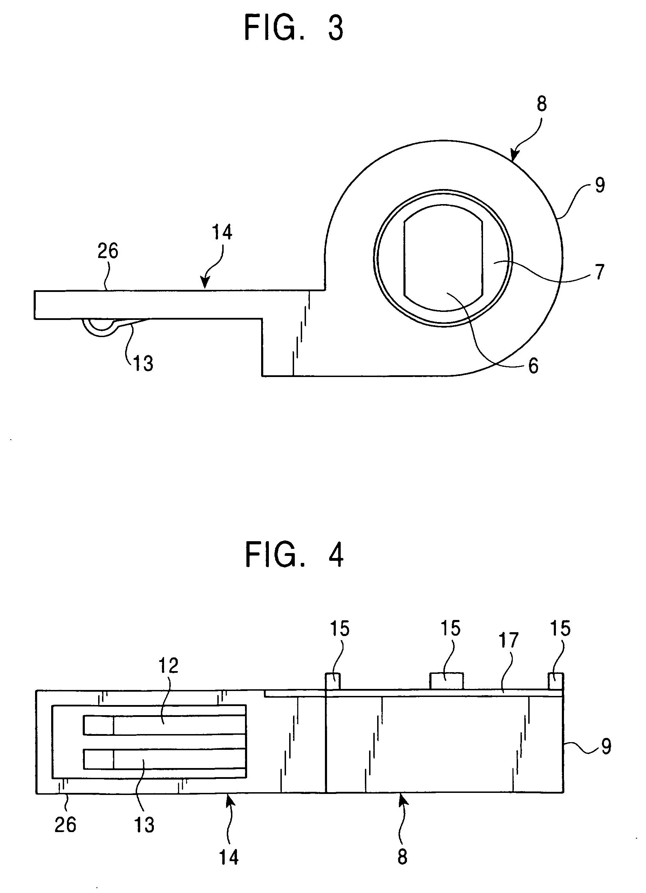

Figs. 1 to 12 are diagrams showing an embodiment of the present invention. Fig. 1 is a perspective view of a mobile phone, which is an example of a structure including a device for detecting an open/closed state of a cover according to the embodiment of the present invention, and Fig. 2 is an enlarged view of a part denoted by A in Fig. 1. In addition, Fig. 3 is a front view of a detector used in the embodiment of the present invention, and Fig. 4 is a plan view of the detector used in the embodiment of the present invention.

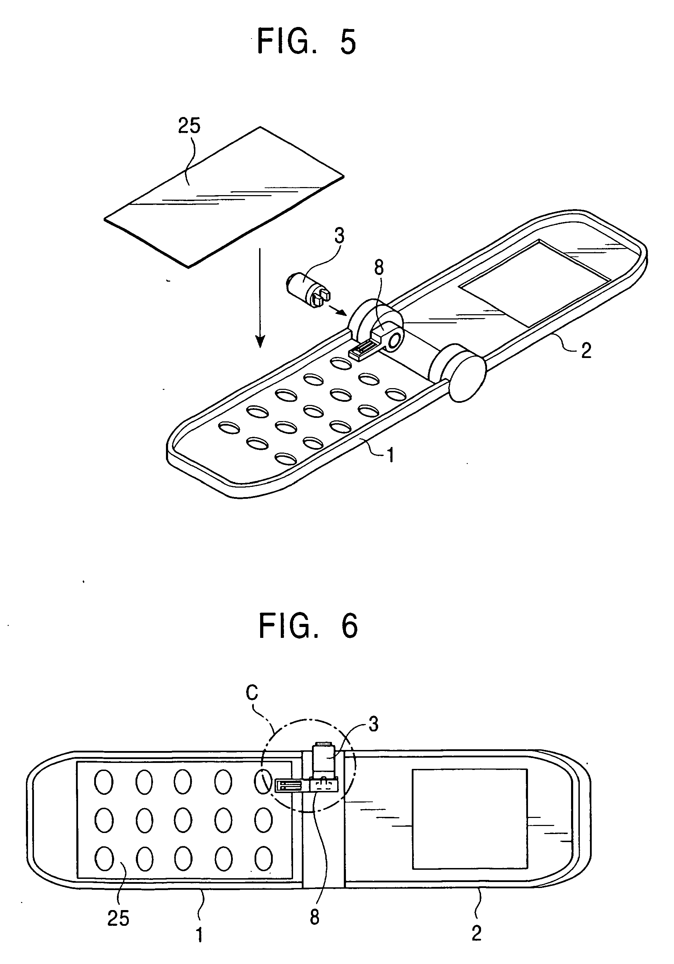

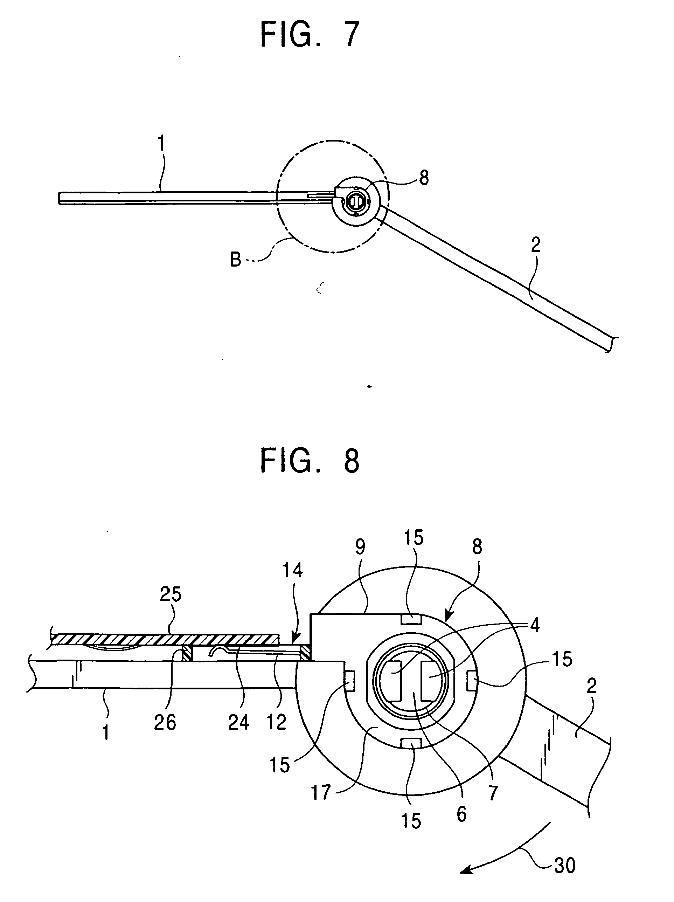

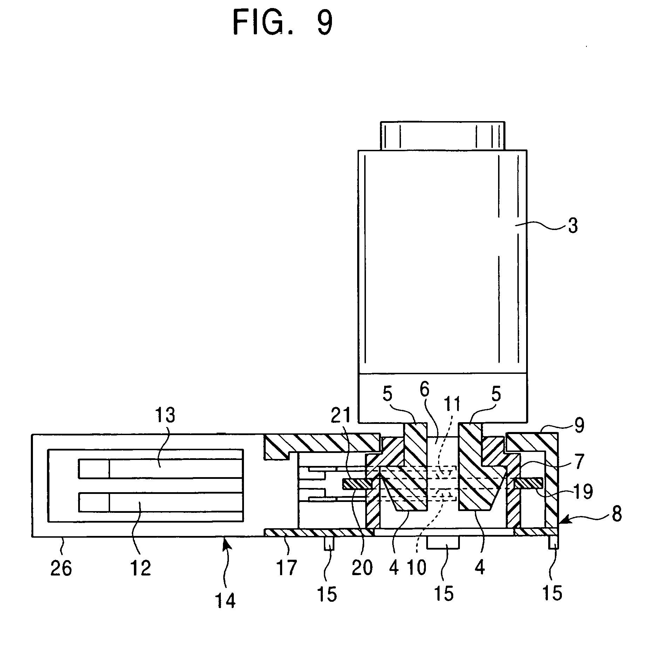

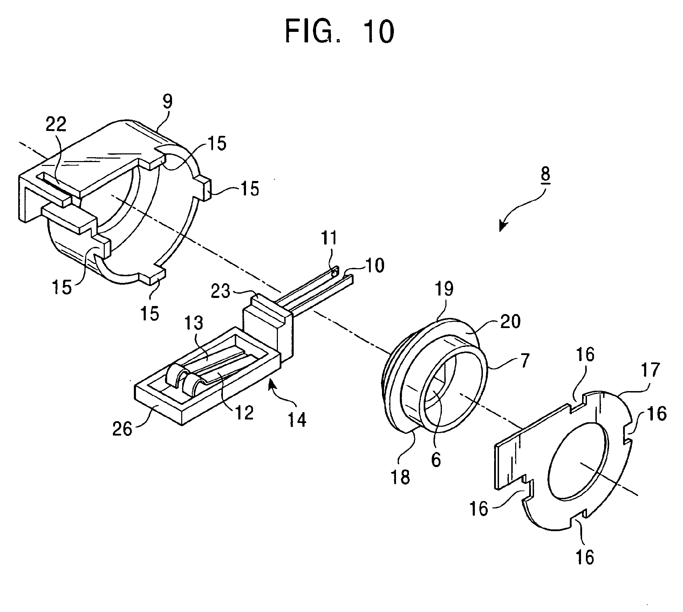

Fig. 5 is a perspective view showing a manner in which the device according to the embodiment of the present invention is installed into a hinge unit of the mobile phone, and Fig. 6 is a rear view of the mobile phone in which the device according to the embodiment of the present invention is installed in the manner shown in Fig. 5. Fig. 7 is a side view of the mobile phone shown in Fig. 6, Fig. 8 is an enlarged sectional view of a part of the mobile phone corresponding to the part denoted by B in Fig. 7, Fig. 9 is an enlarged sectional view of a part corresponding to the part denoted by C in Fig. 6, and Fig. 10 is an exploded perspective view of a main part of the detector used in the embodiment of the present invention.

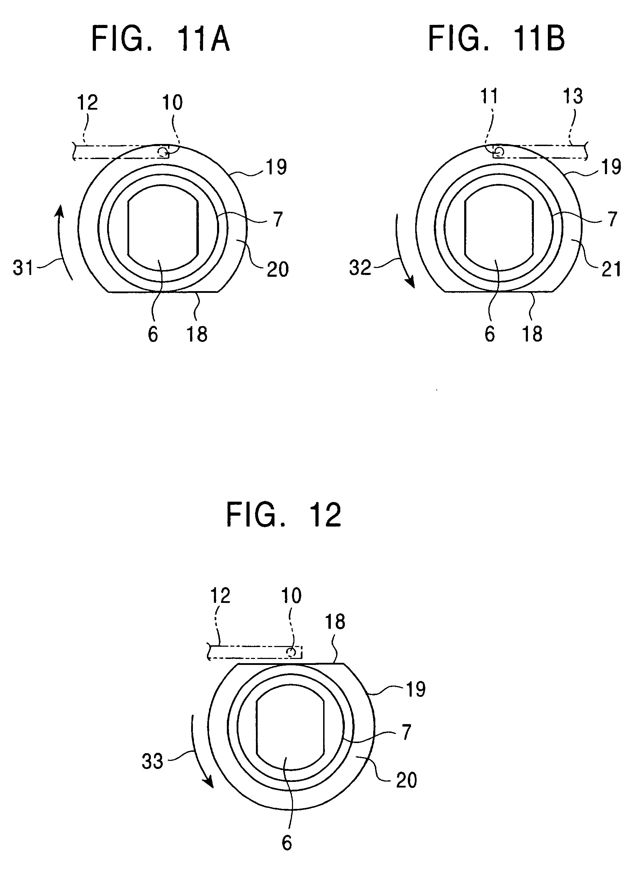

Figs. 11A and 11B are drawings showing a movable contact member and a common contact portion in an ON state, where Fig. 11A shows the movable contact member and Fig. 11B shows the common contact portion. The movable contact member and the common contact portion are disposed inside the detector which is installed as shown in Fig. 8. Fig. 12 is a drawing showing the movable contact member of the detector, which is installed as shown in Fig. 8, in an OFF state.

As shown in Fig. 1, the mobile phone, which is an example of a structure containing a device for detecting an open/closed state of a cover, includes a main body 1 having an operating unit, a cover 2 on which a liquid crystal display is disposed, which is rotatably connected to the main body 1, and which covers the main body 1, and a hinge 3 which connects the cover 2 to the main body 1 in a rotatable manner. The hinge 3 is constructed such that the hinge 3 can rotate together with the cover 2.

As shown in Fig. 2, the device according to the present embodiment, which is installed in the mobile phone, includes a pair of arm portions 5 which have projections 4 at the ends thereof, which are formed integrally with the hinge 3, and which serve as a rotational-force transferring unit for transferring the rotating motion of the hinge 3, and a detector 8 having a rotator 7. An oblong hole 6 is formed in the rotator 7, and the arm portions 5 are inserted and the projections 4 are snapped into the oblong hole 6.

As shown in Figs. 3 and 4, and in Fig. 10, which shows an exploded view seen from the rear, the detector 8.includes the rotator 7, a housing 9 which retains the rotator 7 in a rotatable manner, a wafer 14 which retains terminals 12 and 13 having fixed contact members 10 and 11, respectively, at one end thereof, and a cover 17 which is provided with notches 16 for receiving projections 15 formed. at one side of the housing 9 and which covers the same side of the housing 9.

As shown in Figs. 9 and 10, the rotator 7 includes a rotating plate 19 having a cut portion 18 at the central region thereof. A movable contact member 20 is formed at one side of the rotating plate 19 in an annular pattern along the direction in which the hinge 3 rotates, and, as shown in Fig. 11B, a common contact portion 21 is formed at the other side of the rotating plate 19 in an annular pattern along the direction in which the hinge 3 rotates.

The annular pattern of the above-described movable contact member 20 and that of the common contact portion 21 are formed in, for example, approximately the same shape.

As shown in Fig. 9, the fixed contact members 10 and 11 which are formed at the ends of the terminals 12 and 13, respectively, retained by the wafer 14 are arranged such that the rotating plate 19 of the rotator 7 is disposed between them. Accordingly, the fixed contact member 10 comes into contact with the movable contact member 20, and the fixed contact member 11 comes into contact with the common contact portion 21.

As shown in Fig. 10, the wafer 14 has a fitting portion 23 which is inserted and fitted into a groove 22 formed in the housing 9, so that the wafer 14 can be attached/detached to/from the housing 9 by engaging/disengaging the fitting portion 23 with the groove 22.

The wafer 14 is installed, for example, in the main body 1, and is fixed to the main body 1. As shown in Fig. 8, a printed circuit board 25 having a pattern 24 with which the terminals 12 and 13 retained by the wafer 14 come into contact, is disposed in the main body 1. In addition, the wafer 14 has a protecting wall 26 which surrounds the terminals 12 and 13 extending toward the printed circuit board 25.

When the device according to the present embodiment is installed in the mobile phone, the rotator 7 is installed into the housing 9 in a rotatable manner while the rotating plate 19 of the rotator 7 is disposed between the terminals 12. and 13 shown in Fig. 10 and the cut portion 18 of the rotating plate 19 is at the bottom in Fig. 10. In addition, the wafer 14 is attached to the housing 9 by inserting and fitting the fitting portion 23 of the wafer 14 into the groove 22 formed in the housing 9. Accordingly, the fixed contact member 10 formed at the end of the terminal 12 comes into contact with the movable contact member 20, and the fixed contact member 11 formed at the end of the terminal 13 comes into contact with the common contact portion 21. In this state, the projections 15 of the housing 9 are fitted into the notches 16 formed in the cover 17. Accordingly, the detector 8, which forms a main part of the device according to the present embodiment, is assembled.

Then, the detector 8 which is assembled in the above-described manner is disposed, for example, inside the hinge portion at the rear side of the mobile phone, as shown in Fig. 5. As shown in Fig. 2, the arm portions 5 of the hinge 3 are inserted into the oblong hole 6 formed in the rotator 7 contained in the detector 8. At this time, the arm portions 5 are bent inward due to tapered surfaces of the projections 4. Accordingly, as shown in Fig. 9, the hinge 3 and the rotator 7 are connected such that they can rotate together. The hinge 3 is attached to, for example, the cover 2 of the mobile phone such that the hinge 3 can rotate together with the cover 2.

As shown in Fig. 5, after the hinge 3 is attached to the detector 8, the printed circuit board 25 is installed into the main body 1. Accordingly, as shown in Fig. 8, each of the terminals 12 and 13 comes into contact with the pattern 24 formed on the printed circuit board 25. Accordingly, the fixed contact members 10 and 11 formed at the ends of the terminals 12 and 13 are fixed to the main body 1. When, for example, the cover 2 is open as shown in Fig. 8, the cut portion 18 of the rotating plate 19 disposed inside the detector 8 is at the lower side in Fig. 8.

Next, the operation of the device according to the present embodiment will be described below with reference to Figs. 11A, 11B, and 12.

Figs. 11A and 11B show the movable contact member 20 and the common contact portion 21, respectively, in the state shown in Fig. 8. When the cover 2 of the mobile phone is open as shown in Fig. 8, the fixed contact member 10 at the end of the terminal 12 is in contact with the movable contact member 20 of the rotating plate 19, as shown in Fig. 11A. In addition,. the fixed contact member 11 at the end of the terminal 13 is in contact with the common contact portion 21. Accordingly, a detection state is ON, and a detection signal indicating that the cover 2 is open is transmitted to the pattern 24 of the printed circuit board 25 via the terminals 12 and 13. An operation of, for example, illuminating the liquid crystal display disposed on the cover 2 and keys arranged on the operating unit of the main body 1 is performed on the basis of the detection signal.

When the cover 2 in the state shown in Fig. 8 is rotated in the direction shown by the arrow 30 in Fig. 8, the hinge 3 also rotates together with the cover 2 in the same direction. Accordingly, the rotator 7 also rotates in the direction shown by the arrow 30 in Fig. 8 due to the engagement between the arm portions 5 of the hinge 3 and the hole 6 formed in the rotator 7. Therefore, the rotating plate 19 also rotates in the same direction, and the movable contact member 20 formed on the rotating plate 19 rotates in the direction shown by the arrow 31 in Fig. 11A and the common contact portion 21 rotates in the direction shown by the arrow 32 in Fig. 11B.

When the cover 2 is rotated to a position close to the main body 1, the cut portion 18 of the rotating plate 19 reaches the fixed contact members 10 and 11. Accordingly, the fixed contact member 10 moves away from the movable contact member 20, and the fixed contact member 11 moves away from the common contact portion 21, so that the detection state is changed to OFF. When the cover 2 is completely closed, the movable contact member 20 of the rotating plate 19 and the cut portion 18 are in the state shown in Fig. 12. Although not shown in the figure, the common contact portion 21 of the rotating plate 19 are in the state similar to that shown in Fig. 12.

As described above, when the cover 2 is rotated to a position close to the main body 1 and the detection state is changed to OFF, the closed state of the cover 2 is detected, and an operation of, for example, turning off the illumination of the liquid crystal panel and keys arranged on the operating unit is performed.

Then, when the cover 2 is opened again from the closed state, the hinge 3 rotates together with the cover 2, and the rotator 7 also rotates. Accordingly, the rotating plate 19 rotates in the direction shown by the arrow 33 in Fig. 12. When the cover 2 is slightly opened, the movable contact member 20 of the rotating plate 19 comes into contact with the fixed contact member 10, and the common contact portion 21 comes into contact with the fixed contact member 11. When the cover 2 is opened to the position shown in Fig. 8, the states shown in Figs. 11A and 11B are reestablished.

As described above, when the cover 2 is slightly opened and the movable contact member 20 and the common contact portion 21 come into contact with the fixed contact members 10 and 11, respectively, the detection state is changed to ON, and a detection signal indicating that the cover 2 is open is output.

As described above, according to the present embodiment, the open/closed state of the cover 2 is detected on the basis of whether the movable contact member 20, which rotates along with the hinge 3 and the cover 2, is in contact with or separated from the fixed contact member 10, which is fixed to the main body 1 and which slides on the movable contact member 20. Accordingly, by taking into account the rotational angle of the cover 2 and the time when the movable contact member 20 and the fixed contact member 10 come into contact with each other, the open/closed state of the cover 2 is reliably detected when the rotational angle of the cover 2 reaches a predetermined angle, even if a small obstacle is caught between the cover 2 and the main body 1. Accordingly, the accuracy in detecting the open/closed state of the cover 2 is increased.

In addition, the movable contact member 20 is disposed inside the hinge unit containing the hinge 3, and the terminal 12 having the fixed contact member 10, which comes into contact with the movable contact member 20, is stored inside the main body 1. Accordingly, as shown in Figs. 7 and 8, it is not necessary to provide a projection which extends outward from the cover 2, and the appearance is prevented from being degraded.

In addition, regarding the combination of the movable contact member 20 and the fixed contact member 10, since the movable contact member 20 is disposed inside the hinge unit and the terminal 12 having the fixed contact member 10 is stored inside the main body 1, only a space for disposing the terminal 12 is required in the main body 1. Accordingly, the size of the overall body including the cover 2 and the main body 1 is reduced.

In addition, the movable contact member 20 is formed on the rotating plate 19, which rotates along with the hinge 3, in an annular pattern. Since the movable contact member 20 is formed on the rotating plate 19 whose thickness can be reduced, the movable contact member 20 can be disposed in a small space inside the hinge unit which contains the hinge 3.

In addition, the movable contact member 20 is formed at one side of the rotating plate 19, and the common contact portion 21 is formed at the other side of the rotating plate 19. Since the common contact portion 21 is also disposed inside the hinge portion, it is not necessary to provide a space for disposing the common contact portion 21 in the main body 1 or in the cover 2. Accordingly, the overall size is reduced.

In addition, the rotating plate 19 has the cut portion 18 for separating the movable contact member 20 and the fixed contact member 10 from each other. Accordingly, a rotational angle of the cover 2 at which the open/closed state of the cover 2 is detected can be freely determined by adjusting the shape and the size of the cut portion 18.

In addition, the annular pattern of the movable contact member 20 formed on the rotating plate 19 and the annular pattern of the common contact portion 21 are formed in approximately the same shape. Since annular patterns having the same shape are simply formed at both sides of the rotating plate 19, the process of forming the movable contact member 20 and the common contact portion 21 on the rotating plate 19 can be easily performed.

In addition, since the housing 9 which stores and retains the rotator 7 in a rotatable manner is provided, a bearing for rotatably retaining the rotator 7 is not necessary. Furthermore,. the movable contact member 20 and the common contact portion 21 formed on the rotating plate 19 of the rotator 7 are protected and are prevented from being damaged by dust and dirt which enter from outside. Accordingly, durability is increased.

In addition, the wafer 14 which retains the terminals 12 and 13 having the fixed contact members 10 and 11, respectively, at the ends thereof is formed such that the wafer 14 can be attached/detached to/from the housing 9 by engaging/disengaging the fitting portion 23 formed on the wafer 14 with the groove 22 formed in the housing 9. Accordingly, the rotating plate 19 having the movable contact member 20 and the common contact portion 21 and the terminals 12 and 13 having the fixed contact members 10 and 11, respectively, can be easily installed.

In addition, the printed circuit board 25 having the pattern 24 which is in contact with the terminals 12 and 13 having the fixed contact members 10 and 11, respectively, at the ends thereof is provided, and the protecting wall 26 which surrounds the terminals 12 and 13 extending toward the printed circuit board 25 is also provided. Thus, connecting portions between the terminals 12 and 13 and the pattern 24 of the printed circuit board 25 are protected by the protecting wall 26, and the connecting portions are prevented from being damaged by dust and dirt which enter from outside. Accordingly, durability is increased.

In addition, the arm portions 5 having the projections 4, which serve as the rotational-force transferring unit for transferring the rotating motion of the hinge 3 to the rotating plate 19, are provided. Thus, the rotation of the hinge 3 is smoothly transferred to the rotating plate 19 via the arm portions 5, and the rotational angle of the cover 2 is made the same as that of the rotating plate 19. Accordingly, the accuracy in detecting the open/closed state of the cover 2 is increased.

In addition, since the arm portions 5 having the projections 4 are formed integrally with the hinge 3, the arm portions 5 having the projections 4 can be formed at the same time the hinge 3 is manufactured. Accordingly, the number of processes is reduced and the manufacturing cost is prevented from increasing.

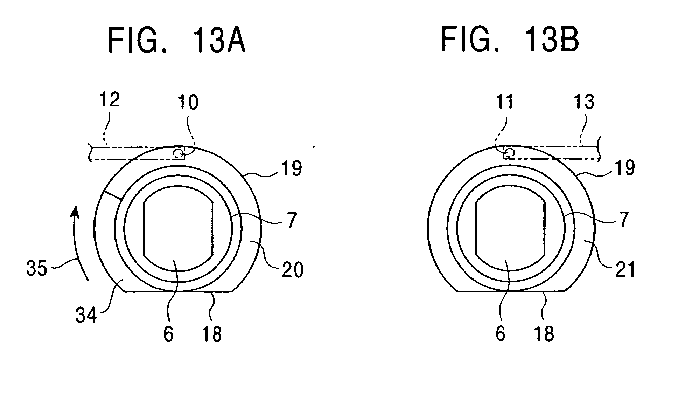

Although the annular pattern of the movable contact member 20 and the annular pattern of the common contact portion 21 formed on opposite sides of the rotating plate 19 have the same shape in the above-described embodiment, they may also be formed in different shapes, as shown in Figs. 13A and 13B.

The annular pattern of the common contact portion 21 shown in Fig. 13B has the same shape as the annular pattern in the above-described embodiment. However, the annular pattern of the movable contact member 20 shown in Fig. 13A has a shape different from the shape of the above-described annular pattern, and is formed continuously with a non-pattern region 34.

When the movable contact member 20 is formed as described above, in Figs. 13A and 13B, which correspond to the state shown in Fig. 8 where the cover 2 is open, the fixed contact member 10 of the terminal 12 is in contact with the movable contact member 20, as shown in Fig. 13A, and the fixed contact member 11 of the terminal 13 is in contact with the common contact portion 21. Accordingly, the detection state is ON, and the open state of the cover 2 is detected.

When the cover 2 is closed from the state shown in Figs. 13A and 13B, the rotating plate 19 rotates together with the hinge 3 in the same direction. When the cover 2 is rotated to a predetermined position, the fixed contact member 10 reaches the non-pattern region 34 where the fixed contact member 10 moves away from the movable contact member 20. Accordingly, the detection state is changed to OFF. The operation of the common contact portion 21 shown in Fig. 13B is similar to that in the above-described embodiment.

In this case, the closed state of the cover 2 is detected when the cover 2 is closed to the midpoint.

On the contrary, when the cover 2 in a completely-closed state is opened, although the rotating plate 19 rotates along with the cover 2, the OFF state is maintained while the fixed contact member 10 slides on the non-pattern region 34 of the rotating plate 19 after moving away from a position such that the fixed contact member 10 opposes the cut portion 18. Then, when the cover 2 is opened to the midpoint, the fixed contact member 10 comes into contact with the movable contact member 20 and the detection state is changed to ON, so that the open state of the cover 2 is detected.

In this manner, the time when the fixed contact member 10 comes into contact with the movable contact member 20 and the time when the fixed contact member 11 comes into contact with the common contact portion 21 can be offset from each other. More specifically, the setting may be such that the fixed contact member 11 comes into contact with the common contact portion 21 first, and the fixed contact member 10 comes into contact with the movable contact member 20 later on. Accordingly, the rotational angle of the cover 2 at which the open/closed state of the cover 2 is detected can be set to a desired angle by changing the shape of the annular pattern of the movable contact member 20.

In the above-described embodiment, the hinge 3 which is connected to the rotator 7 having the rotating plate 19 is attached to the cover 2 such that the hinge 3 can rotate together with the cover 2, and the wafer 14 retaining the terminals 12 and 13 having the fixed contact members 10 and 11, respectively, is fixed to the main body 1. Alternatively, however, the hinge 3 may be connected to the main body 1 such that the hinge 3 can rotate together with the main body 1, and the wafer 14 retaining the terminals 12 and 13 having the fixed contact members 10 and 11, respectively, may be fixed to the cover 2.

In such a case, when the cover 2 rotates, the hinge 3 rotates with respect to the cover 2, and the rotating plate 19 formed on the rotator 7 also rotates with respect to the cover 2. Similarly to the above-described embodiment, also in this case, the fixed contact member 10 comes into contact with or moves away from the movable contact member 20 when the cover 2 reaches a predetermined rotational angle, and the open/closed state of the cover 2 is detected.

In addition, although the cut portion 18 is formed in the rotating plate 19 in the present embodiment, it is not necessary to form the cut portion 18. The rotating plate 19 may also be formed in a completely circular shape, and a non-pattern portion which serves the same function as the cut portion 18 may be provided. Also in this case, the detection state is changed to OFF when the fixed contact member 10 comes into contact with the non-pattern portion, and the operational effects similar to those of the above-described embodiment can be obtained.

In addition, in the above-described embodiment, the annular patterns of the movable contact member 20 and the common contact portion 21 are formed on opposite sides of the rotating plate 19 such that the open state of the cover 2 corresponds to an ON state and the closed state thereof corresponds to an OFF state. However, the annular patterns of the movable contact member 20 and the common contact portion 21 may also be formed such that the open state of the cover 2 corresponds to an OFF state and the closed state thereof corresponds to an ON state. In such a case, the open state of the cover 2 is detected when the fixed contact member 10 is separated from the movable contact member 20, and the closed state of the cover 2 is detected when the fixed contact member 10 is in contact with the movable contact member 20.

In addition, according to the above-described embodiment, the arm portions 5 having the projections 4 are formed integrally with the hinge 3, and the oblong hole 6 for receiving the arm portions 5 is formed in the rotator 7 having the rotating plate 19, on which the movable contact member 20 and the common contact portion 21 are formed. Alternatively, however, the arm portions 5 having the projections 4 may be formed on the rotator 7, and the oblong hole 6 for receiving the arm portions 5 may be formed in an end surface of the hinge 3.

## Claims

1. A device for detecting an open/closed state of a cover (2), the device being installed in a structure having a main body (1), the cover (2) which is rotatably connected to the main body (1) and which covers the main body (1), and a hinge (3) which connects the cover (2) to the main body (1) in a rotatable manner, and the device comprising:
a movable contact member (20) which rotates along with the hinge (3);
a fixed contact member (10,11) which slidably moves relative to the movable contact member (20), and a rotator (7) having a rotating plate (19) which rotates along with the hinge (3),
wherein the open/closed state of the cover (2) is detected on the basis of whether the movable contact member (20) and the fixed contact member (10,11) are in contact with each other or separated from each other,
wherein the movable contact member (20) has an annular pattern formed on the rotating plate (19) along the rotational direction of the hinge (3),
wherein the movable contact member (20) is provided at one side of the rotating plate (19) of the rotator (7), **characterized in that** a common contact portion (21) is formed at the other side of the rotating plate (19), the common contact portion (21) being formed in an annular pattern along the rotational direction of the hinge (3), and
wherein the fixed contact member (10,11) includes a pair of fixed contact elements (10,11) which are arranged such that one (10) of the fixed contact elements (10,11) comes into contact with the movable contact member (20) and the other fixed contact element (11) comes into contact with the common contact portion (21), the rotating plate (19) being disposed between the fixed contact elements (10,11).

2. A device for detecting an open/closed state of a cover according to Claim 1, wherein the rotating plate (19) of the rotator (7) has a cut portion (18) for separating the movable contact member (20) formed on the rotating plate (19) and the fixed contact member (10,11) from each other.

3. A device for detecting an open/closed state of a cover according to Claim 1 or 2, wherein the annular pattern of the movable contact member (20) and the annular pattern of the common contact portion (21) are formed in approximately the same shape.

4. A device for detecting an open/closed state of a cover according to Claim 1 or 2, wherein the annular pattern of the movable contact member (20) and the annular pattern of the common contact portion (21) are formed in different shapes.

5. A device for detecting an open/closed state of a cover according to any of Claims 1 to 4, further comprising a housing (9) which is disposed such that the housing (9) opposes the hinge (3) and which stores and retains the rotator (7) in a rotatable manner.

6. A device for detecting an open/closed state of a cover according to Claim 5, further comprising a detachable wafer (14) which is attached to the housing (9) and which retains the fixed contact member (10,11).

7. A device for detecting an open/closed state of a cover according to any of Claims 1 to 6, further comprising:
a terminal (12,13) on which the fixed contact member is formed;
a circuit board (25) having a pattern (24) which comes into contact with the terminal (12,13); and
a protecting wall (26) which surrounds the terminal facing the circuit board (25).

8. A device for detecting an open/closed state of a cover according to any of Claims 1 to 7, further comprising a rotational-force transferring unit (4) which transfers the rotating motion of the hinge (3) to the rotating plate (19) of the rotator (7).

9. A device for detecting an open/closed state of a cover according to Claim 8, wherein the rotational-force transferring unit (4) is formed integrally with the hinge (3).

10. A device for detecting an open/closed state of a cover according to Claim 8 or 9, wherein the rotational-force transferring unit (4) includes an arm portion (5) having a projection (4) at an end thereof, and
wherein an oblong hole (6) is formed in the rotator (7), the arm portion (5) being inserted and the projection being snapped into the oblong hole (6).

## Patentansprüche

1. Vorrichtung zum Feststellen eines geöffneten/geschlossenen Zustands einer Abdeckung (2), wobei die Vorrichtung an einer Konstruktion installiert ist, die einen Hauptkörper (1), die Abdeckung (2), die mit dem Hauptkörper (1) rotationsbeweglich verbunden ist und den Hauptkörper (1) überdeckt, sowie ein Gelenk (3) aufweist, das die Abdeckung (2) mit dem Hauptkörper (1) rotationsbeweglich verbindet, und wobei die Vorrichtung Folgendes aufweist:
ein bewegliches Kontaktelement (20), das sich zusammen mit dem Gelenk (3) dreht;
ein feststehendes Kontaktelement (10, 11), das relativ zu dem beweglichen Kontaktelement (20) verschiebbar ist; und
ein Drehglied (7) mit einer Drehplatte (19), die sich zusammen mit dem Gelenk (3) dreht,
wobei der geöffnete/geschlossene Zustand der Abdeckung (2) auf der Basis davon festgestellt wird, ob das bewegliche Kontaktelement (20) und das feststehende Kontaktelement (10, 11) miteinander in Kontakt stehen oder voneinander getrennt sind,
wobei das bewegliche Kontaktelement (20) ein ringförmiges Muster aufweist, das auf der Drehplatte (19) entlang der Rotationsrichtung des Gelenks (3) ausgebildet ist,
wobei das bewegliche Kontaktelement (20) auf der einen Seite der Drehplatte (19) des Drehglieds (7) vorgesehen ist,
**dadurch gekennzeichnet, dass** ein gemeinsamer Kontaktbereich (21) auf der anderen Seite von der Drehplatte (19) gebildet ist, wobei der gemeinsame Kontaktbereich (21) in einem ringförmigen Muster entlang der Rotationsrichtung des Gelenks (3) ausgebildet ist, und
dass das feststehende Kontaktelement (10, 11) ein Paar feststehende Kontaktglieder (10, 11) aufweist, die derart angeordnet sind, dass eines (10) der feststehenden Kontaktglieder (10, 11) mit dem beweglichen Kontaktelement (20) in Kontakt tritt und das andere feststehende Kontäktglied (11) mit dem gemeinsamen Kontaktbereich (21) in Kontakt tritt, wobei die Drehplatte (19) zwischen den feststehenden Kontaktgliedern (10, 11) angeordnet ist.

2. Vorrichtung zum Feststellen eines geöffneten/geschlossenen Zustands einer Abdeckung nach Anspruch 1,
wobei die Drehplatte (19) des Drehglieds (7) einen abgeschnittenen Bereich (18) zum Trennen des an der Drehplatte (19) ausgebildeten beweglichen Kontaktelements (20) und des feststehenden Kontaktelements (10, 11) voneinander aufweist.

3. Vorrichtung zum Feststellen eines geöffneten/geschlossenen Zustands einer Abdeckung nach Anspruch 1 oder 2,
wobei das ringförmige Muster des beweglichen Kontaktelements (20) und das ringförmige Muster des gemeinsamen Kontaktbereichs (21) in etwa mit der gleichen Formgebung ausgebildet sind.

4. Vorrichtung zum Feststellen eines geöffneten/geschlossenen Zustands einer Abdeckung nach Anspruch 1 oder 2,
wobei das ringförmige Muster des beweglichen Kontaktelements (20) und das ringförmige Muster des gemeinsamen Kontaktbereichs (21) mit unterschiedlichen Formgebungen ausgebildet sind.

5. Vorrichtung zum Feststellen eines geöffneten/geschlossenen Zustands einer Abdeckung nach Ansprüche 1 bis 4,
weiterhin aufweisend ein Gehäuse (9), das derart angeordnet ist, dass das Gehäuse (9) dem Gelenk (3) gegenüberliegt sowie das Drehglied (7) aufnimmt und rotationsbeweglich festhält.

6. Vorrichtung zum Feststellen eines geöffneten/geschlossenen Zustands einer Abdeckung nach Anspruch 5,
weiterhin aufweisend einen lösbaren Träger (14), der an dem Gehäuse (9) angebracht ist und der das feststehende Kontaktelement (10, 11) festhält.

7. Vorrichtung zum Feststellen eines geöffneten/geschlossenen Zustands einer Abdeckung nach einem der Ansprüche 1 bis 6,
weiterhin aufweisend:
einen Anschluss (12, 13), an dem das feststehende Kontaktelement gebildet ist;
eine Leiterplatte (25) mit einem Muster (24), das mit dem Anschluss (12, 13) in Kontakt gelangt; und
eine Schutzwand (26), die den Anschluss auf der der Leiterplatte (25) zugewandten Seite umgibt.

8. Vorrichtung zum Feststellen eines geöffneten/geschlossenen Zustands einer Abdeckung nach einem der Ansprüche 1 bis 7,
weiterhin aufweisend eine Rotationskraft-Übertragungseinheit (4), die die Rotationsbewegung des Gelenks (3) auf die Drehplatte (19) des Drehglieds (7) überträgt.

9. Vorrichtung zum Feststellen eines geöffneten/geschlossenen Zustands einer Abdeckung nach Anspruch 8,
wobei die Rotationskraft-Überträgungseinheit (4) mit dem Gelenk (3) einstückig ausgebildet ist.

10. Vorrichtung zum Feststellen eines geöffneten/geschlossenen Zustands einer Abdeckung nach Anspruch 8 oder 9,
wobei die Rotationskraft-Übertragungseinheit (4) einen Armbereich (5) mit einem Vorsprung (4) an dem einen Ende aufweist, und
wobei eine längliche Öffnung (6) in dem Drehglied (7) ausgebildet ist, wobei der Armbereich (5) in die längliche Öffnung (6) eingesetzt ist und der Vorsprung in diese eingeschnappt ist.

## Revendications

1. Dispositif pour détecter un état d'ouverture/fermeture d'un couvercle (2), le dispositif étant installé dans une structure ayant un corps principal (1), le couvercle (2) qui est monté de manière à pouvoir pivoter sur le corps principal (1), et une charnière (3) qui relie le couvercle d'une manière pivotante au corps principal (1), et le dispositif comprenant :
un élément mobile de contact (20) qui tourne en accompagnant la charnière (3);
un élément fixe de contact (10, 11) qui peut coulisser par rapport à l'élément mobile de contact (20) ; et
un rotateur (7) ayant une plaque rotative (19) qui tourne avec la charnière (3),
dans lequel l'état d'ouverture/fermeture du couvercle (2) est détecté suivant que l'élément mobile de contact (20) et l'élément fixe de contact (10, 11) sont au contact l'un de l'autre ou sont séparés l'un de l'autre,
l'élément mobile de contact (20) ayant une configuration annulaire créée sur la plaque rotative (19) dans le sens de rotation de la charnière (3),
l'élément mobile de contact (20) étant disposé sur une face de la plaque rotative (19) du rotateur (7), **caractérisé en ce qu'**une partie de contact commune (21) est formée sur l'autre face de la plaque rotative (19), la partie de contact commune (21) ayant une configuration annulaire créée dans le sens de rotation de la charnière (3), et
dans lequel l'élément fixe de contact (10, 11) comprend une paire d'éléments fixes de contact (10, 11) conçus de façon qu'un premier (10) des éléments fixes de contact (10, 11) crée un contact avec l'élément mobile de contact (20) et que l'autre élément fixe de contact (11) crée un contact avec la partie de contact commune (21), la plaque rotative (19) étant disposée entre les éléments fixes de contact (10, 11).

2. Dispositif pour détecter un état d'ouverture/fermeture d'un couvercle selon la revendication 1, dans lequel la plaque rotative (19) du rotateur (7) a une partie coupée (18) pour séparer l'un de l'autre l'élément mobile de contact (20) formé sur la plaque rotative (19) et l'élément fixe de contact (10, 11).

3. Dispositif pour détecter un état d'ouverture/fermeture d'un couvercle selon la revendication 1 ou 2, dans lequel la configuration annulaire de l'élément mobile de contact (20) et la configuration annulaire de la partie de contact commune (21) sont dotées approximativement de la même forme.

4. Dispositif pour détecter un état d'ouverture/fermeture d'un couvercle selon la revendication 1 ou 2, dans lequel la configuration annulaire de l'élément mobile de contact (20) et la configuration annulaire de la partie de contact commune (21) sont dotées de formes différentes.

5. Dispositif pour détecter un état d'ouverture/fermeture d'un couvercle selon l'une quelconque des revendications 1 à 4, comprenant en outre un logement (9) qui est disposé de façon que le logement (9) soit en regard de la charnière (3) et qui contient et retient le rotateur (7) d'une manière permettant une rotation.

6. Dispositif pour détecter un état d'ouverture/fermeture d'un couvercle selon la revendication 5, comprenant en outre une plaquette (14) qui est fixée au logement (9) et qui retient l'élément fixe de contact (10, 11).

7. Dispositif pour détecter un état d'ouverture/fermeture d'un couvercle selon l'une quelconque des revendications 1 à 6, comprenant en outre :
une borne (12, 13) sur laquelle est formé l'élément fixe de contact ;
une carte de circuit (25) ayant un motif (24) qui vient au contact de la borne (12, 13);et
une paroi protectrice (26) qui entoure la borne en face de la carte de circuit (25).

8. Dispositif pour détecter un état d'ouverture/fermeture d'un couvercle selon l'une quelconque des revendications 1 à 7, comprenant en outre un moyen de transmission (4) de force de rotation qui transmet le mouvement de rotation de la charnière (3) à la plaque rotative (9) du rotateur (7).

9. Dispositif pour détecter un état d'ouverture/fermeture d'un couvercle selon la revendication 8, dans lequel le, moyen de transmission (4) de force de rotation fait corps avec la charnière (3).

10. Dispositif pour détecter un état d'ouverture/fermeture d'un couvercle selon la revendication 8 ou 9, dans lequel le moyen de transmission (4) de force de rotation comporte une partie formant bras (5) ayant une saillie (4) à une extrémité de celle-ci, et
dans lequel un trou oblong (6) est formé dans le rotateur (7), la partie formant bras (5) étant insérée et la saillie enclenchée dans le trou oblong (6).
